Europäisches Patentamt

European Patent Office

Office européen des brevets

(11) Veröffentlichungsnummer: **0 257 706 B1**

# EUROPÄISCHE PATENTSCHRIFT

(45) Veröffentlichungstag der Patentschrift: **20.05.92**

(21) Anmeldenummer: **87201560.7**

(22) Anmeldetag: **18.08.87**

(51) Int. Cl.⁵: **G02B 6/36**

(54) **Anordnung zur zugentlastenden Verbindung eines optischen Kabels mit einer Kupplungseinrichtung.**

(30) Priorität: **22.08.86 DE 3628570**

(43) Veröffentlichungstag der Anmeldung:
**02.03.88 Patentblatt 88/09**

(45) Bekanntmachung des Hinweises auf die
Patenterteilung:
**20.05.92 Patentblatt 92/21**

(84) Benannte Vertragsstaaten:
**CH DE FR GB IT LI NL**

(56) Entgegenhaltungen:
**EP-A- 0 154 781**
**DE-A- 2 648 995**
**DE-A- 2 920 266**
**FR-A- 2 552 891**
**US-A- 4 101 198**

(73) Patentinhaber: **Philips Patentverwaltung
GmbH
Wendenstrasse 35 Postfach 10 51 49
W-2000 Hamburg 1(DE)**

(84) Benannte Vertragsstaaten:
**DE**

(73) Patentinhaber: **N.V. Philips' Gloeilampenfabrieken
Groenewoudseweg 1
NL-5621 BA Eindhoven(NL)**

(84) Benannte Vertragsstaaten:
**CH FR GB IT LI NL**

(72) Erfinder: **Oppenländer, Theodor
Graf-Adolf-Strasse 77
W-5000 Köln 80(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Anordnung zur zugentlastenden und gegen axiale Verschiebung gesicherten Verbindung eines Zugentlastungselemente enthaltenden optischen Kabels mit Kabelumhüllung, aus dessen Endbereich mindestens ein mit einer Aufnahmehülse abgeschlossenes Ende eines Lichtwellenleiters (LWL) hervorragt, mit einem Gehäuseteil einer Kupplungseinrichtung, bestehend aus einer Abstandshülse, die sowohl formschlüssig vom Gehäuseteil gehalten ist als auch formschlüssig mit dem Endbereich der Kabelumhüllung durch eine die Zugentlastungselemente des Kabels klemmende Abschlußhülse verbunden ist, wobei die Abstandshülse einen Mittelabschnitt aufweist, welcher die Enden der LWL mit Abstand umgibt, und wobei die Abstandshülse aus zwei Teilen besteht, welche durch Befestigungsmittel aneinander gehalten sind.

Bei einer nach der DE-A-26 48 995 bekannten derartigen Anordnung ist die Abstandshülse mit ihrem ein Innengewinde aufweisenden Ende auf ein Gehäuseteil der Kupplungseinrichtung geschraubt. Das andere Ende ist auf den Endbereich der Kabelumhüllung gecrimpt. Bei der Herstellung der zugfesten Verbindung der Zugentlastungselemente des optischen Kabels mit dem Gehäuseteil der Kupplungseinrichtung besteht die Gefahr, daß unerkannt unzulässig stark gekrümmte Verläufe der Enden der LWL entstehen.

Durch die DE-A-29 20 266 ist eine zugentlastende Kupplung für Lichtwellenleiterkabel bekannt, welche eine Abstandshülse mit zylinderförmiger Bohrung aufweist, die die Lichtwellenleiter mit Abstand umschließt und aus zwei Halbschalen besteht.

Der Erfindung liegt die Aufgabe zugrunde, eine Anordnung der eingangs genannten Art so zu gestalten, daß unzulässig starke Krümmungen der Enden der LWL vermieden werden.

Die Lösung gelingt dadurch, daß die als Halbschalen ausgebildeten Teile der Abstandshülse jeweils mit der Innenfläche eines Endabschnitts der Halbschalen in wählbarer axialer Relativlage zur Abschlußhülse formschlüssig an einen Längenabschnitt der Abschlußhülse angelegt sind und mit radial nach innen gerichteten Ringansätzen des gegenüberliegenden Endabschnitts der Abstandshülse in einen Ringnut des Gehäuseteils eingreifen.

Bei der Montage der erfindungsgemäß gestalteten zweischaligen Abstandshülse ist die Lagezuordnung des Gehäuseteils zum Endbereich der Kabelumhüllung bereits beim seitlichen Anlegen der ersten Halbschale fixiert. Danach kann der Verlauf der noch sichtbaren Enden der LWL kontrolliert werden. Wenn keine unzulässig starken Krümmungen feststellbar sind, wird die zweite Halbschale angelegt.

Da die am Längenabschnitt der Abschlußhülse gebildete Formschlußverbindung mit der Abstandshülse in mehreren axialen Abstandzuordnungen fixierbar ist, läßt sich zum Ausgleich von toleranzbedingt unterschiedlichen freien Längen der LWL verschiedener Kabel der Abstand zwischen dem Gehäuseteil und dem Endbereich der Kabelumhüllung anpassen.

Eine vorteilhafte konstruktive Ausführung besteht darin, daß die formschlüssige Verbindung durch zwischen Abschluß- und Abstandshülse gegenseitig ineinandergreifende gleich beastandete Umfangsrillen auf der Innenfläche der Abstandshülse bzw. auf der Oberfläche des Endabschnitts der Abschlußhülse bewirkt ist.

Insbesondere zur vorläufigen Halterung der Halbschalen ist vorgesehen, daß die Halbschalen durch mindestens ein elastisches Ringelement aneinander gepreßt sind. Eine vorteilhafte Lösung zur dauerhaften Halterung der Halbschalen ist dadurch gekennzeichnet, daß diese durch eine durch Wärme aufgeschrumpfte Schlauchhülse zusammengehalten sind. Dabei wird die Schlauchhülse vorzugsweise so lang ausgeführt, daß sie über die Kabelumhüllung und über das Gehäuseteil der Kupplungseinrichtung greift.

Die erfindungsgemäße Bauart ermöglicht problemlos die Ausführung von winklig verlaufenden Kupplungen, in dem die Abstandshülsen in Durchgangsrichtung abgewinkelt bzw. gekrümmt gestaltet und in der Winkelebene geteilt werden.

Die Erfindung und deren Vorteile werden anhand der Beschreibung von in der Zeichnung dargestellten vorteilhaften Ausführungsbeispielen näher erläutert.

Figur 1    zeigt einen Längsschnitt durch eine erfindungsgemäße Anordnung

Figur 2    zeigt teilweise im Schnitt eine Ansicht einer abgewinkelten Ausführungsform einer erfindungsgemäß gestalteten Abstandshülse

Figur 3    zeigt die Seitenansicht einer Halbschale der Abstandshülse nach Figur 2

Aus dem Endbereich 1 der Kabelumhüllung eines optischen Kabels ragen zwei LWL 2 und 3 heraus, deren Enden in Steckerhülsen 4 geführt und am nicht erkennbaren Ende der Steckerhülse 4 mit deren Stirnfläche plangeschliffen sind. Die Enden der LWL 2 und 3 müssen locker und ohne Zugspannung geführt sein. Beim Zurückfedern der Steckerhülse 4 anläßlich eines Kupplungsvorganges muß die dadurch entstehende Mehrlänge der LWL mittels einer sanften Auswölbung aufgefangen werden. Deshalb umgeben die Bauelemente der Kupplungseinrichtung den freien Bereich der LWL mit recht großem Abstand.

Mit dem Endbereich 1 der Kabelumhüllung ist eine Abschlußhülse zugfest verbunden. Sie weist ein Crimpteil 5 auf, welches außen auf den Endbereich 1 in der Weise aufgecrimpt ist, daß die Zugentlastungselemente des optischen Kabels eingeklemmt sind. Der Crimpbereich ist nach dem Aufcrimpen durch einen Schrumpfschlauch 14 abgedeckt.

Ferner weist die Abschlußhülse einen Längsabschnitt 6 auf, an dessen Außenfläche eine Mehrzahl von axial mit gleichen Abstand aufeinanderfolgenden Ringerhebungen 7 angeordnet sind, welche je für sich geschlossen sein oder auch gewindeartig ineinander übergehend verlaufen können. Diese Erhebungen 7 greifen zur Bildung eines in axialer Richtung wirksamen Formschlusses in zugeordnete Ringnuten am Innenumfang eines anliegenden Endabschnitts der Abstandshülse 8 ein. Der gegenüberliegende Endabschnitt der Abstandshülse 8 greift formschlüssig in das Gehäuseteil 9 ein, welches zu diesem Zweck eine umlaufende Ringnut 10 aufweist, in welche der radial nach innen gerichtete Ringansatz 11 der Abstandshülse 8 eingreift.

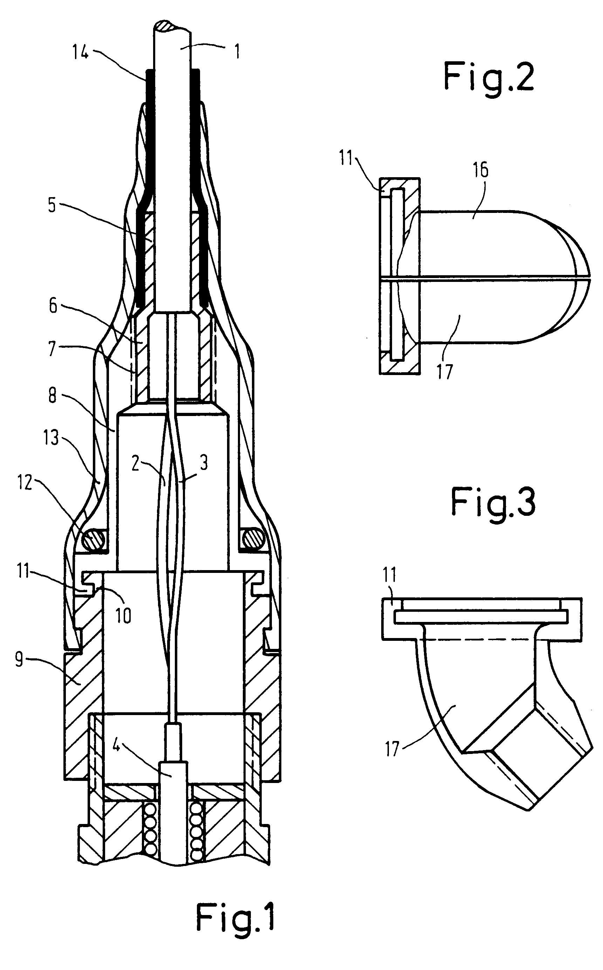

Die Abstandshülse 8 ist erfindungsgemäß aus zwei Halbschalen zusammengesetzt. Zunächst wird die in Figur 1 erkennbare erste Halbschale von der Rückseite her angelegt. Dabei wird die axiale Zuordnung zum Längenabschnitt 6 der Abschlußhülse so gewählt, daß die Enden der LWL 2 und 3 nur mit geringer Wölbung verlaufen. Eine Anpassung des Abstandes ist leicht möglich, weil sowohl auf dem Längenabschnitt 6 als auch am zugeordneten Endteil der Abstandshülse eine Mehrzahl von gleich beabstandeten und gleich ausgebildeten Ringerhebungen bzw. Ringnuten vorgesehen ist. Bereits durch nur eine anliegende Halbschale der Abstandshülse 8 ist die axiale Zuordnung fixiert. Diese Lage kann auch beim Anlegen der zweiten Halbschale nicht verschoben werden.

Der stramm umfassende O-Ring 12 hält die Halbschalen der Abstandshülse 8 provisorisch zusammen. Den endgültigen Zusammenhalt bewirkt die durch Wärme aufgeschrumpfte Schlauchhülse 13, welche sich vom Gehäuseteil 9 bis über den Endbereich 1 der Kabelumhüllung erstreckt, so daß ein gefällig aussehender glatter Außenbereich entsteht.

In Figur 1 ist eine gerade verlaufende Abstandshülse 8 dargestellt. Erforderlichenfalls ermöglicht die erfindungsgemäße Gestaltung auch die problemlose Ausführung von gewinkelten Kupplungseinrichtungen durch entsprechende Gestaltung der Abstandshülse nach den Figuren 2 und 3, so daß der Endbereich 1 der Kabelumhüllung um einen Winkel bis zu 90° (in Fig. 3 45°) gegenüber der Steckrichtung abgebogen verläuft.

Die beiden Halbschalen sind in Figur 2 mit 15 und 16 bezeichnet. Der in Figur 3 erkennbare, dem Längenabschnitt 6 der Abschlußhülse zugeordnete Bereich entspricht der Ausführung nach Figur 1.

Die für die Ausführungsbeispiele gewählte konstruktive Gestaltung der Formschlußelemente hat sich als besonders geeignet erwiesen. Für die Erfindung sind jedoch selbstverständlich auch andere an sich bekannte Ausführungsarten von Formschlußelementen verwendbar.

## Patentansprüche

1. Anordnung zur zugentlastenden und gegen axiale Verschiebung gesicherten Verbindung eines Zugentlastungselemente enthaltenden optischen Kabels mit Kabelumhüllung, aus dessen Endbereich mindestens ein mit einer Aufnahmehülse abgeschlossenes Ende eines Lichtwellenleiters (LWL) hervorragt, mit einem Gehäuseteil einer Kupplungseinrichtung, bestehend aus einer Abstandshülse (8), die sowohl formschlüssig vom Gehäuseteil (9) gehalten ist als auch formschlüssig mit dem Endbereich (1) der Kabelumhüllung durch eine die Zugentlastungselemente des Kabels klemmende Abschlußhülse (5,6) verbunden ist, wobei die Abstandshülse (8) einen Mittelabschnitt aufweist, welcher das/die Ende(n) des/der LWL (2,3) mit Abstand umgibt, und wobei die Abstandshülse (8) aus zwei Teilen besteht, welche durch Befestigungsmittel aneinander gehalten sind, dadurch gekennzeichnet, daß die als Halbschalen ausgebildeten Teile der Abstandshülse jeweils mit der Innenfläche eines Endabschnitts der Halbschalen (16,17) in wählbarer axialer Relativlage zur Abschlußhülse (5,6) formschlüssig an einen Längenabschnitt (6) der Abschlußhülse (5,6) angelegt sind und mit radial nach innen gerichteten Ringansätzen (11) des gegenüberliegenden Endabschnitts der Abstandshülse in eine Ringnut (10) des Gehäuseteils (9) eingreifen.

2. Anordnung nach Anspruch 1, dadurch gekennzeichnet, daß die formschlüssige Verbindung zwischen Abschluß- und Abstandshülse durch gegenseitig ineinandergreifende gleich beabstandete Umfangsrillen (7) auf der Innenfläche der Abstandshülse (8) bzw. auf der Oberfläche des Endabschnitts der Abschlußhülse (6) bewirkt ist.

3. Anordnung nach einem der Ansprüche 1 bis 2, dadurch gekennzeichnet, daß die Halbschalen (16,17) durch mindestens ein elastisches Ringelement (12) aneinandergepreßt sind.

4. Anordnung nach einem der Ansprüche 1 bis 3, dadurch gekennzeichnet, daß die Halbschalen (16,17) durch eine durch Wärme aufgeschrumpfte Schlauchhülse (13) zusammengehalten sind.

5. Anordnung nach Anspruch 4, dadurch gekennzeichnet, daß die durch Wärme aufgeschrumpfte Schlauchhülse (13) über den Endbereich (1) der Kabelumhüllung und über das Gehäuseteil (9) der Kupplungseinrichtung greift.

6. Anordnung nach einem der Ansprüche 1 bis 5, dadurch gekennzeichnet, daß die Abstandshülse (8) in Durchgangsrichtung abgewinkelt bzw. gekrümmt verläuft und die Halbschalen (16 und 17) etwa gleich groß sind.

## Claims

1. An arrangement for forming a strain-relief connection which is safeguarded against axial displacement between an optical fibre cable containing strain-relief elements and having a cable sheath, at least one end of an optical waveguide which is closed by means of a sleeve projecting from the end portion of the cable, and a housing of a coupling device which consists of a space sleeve (8) which interlocks with the housing (9) and which matchingly contacts the end portion (1) of the cable sheath through a cover sleeve (5,6) which clamps the strain-relief elements oft he cable, the spacer sleeve (8) having a centre portion which surrounds the ends of the optical waveguides (2,3) with some spacing, and the spacer sleeve (8) consisting of two parts which are held together by fixing means, characterized in that each of the parts of the spacer sleeve, which are constructed as half-shells (16,17), matchingly abuts against a longitudinal section (6) of the cover sleeve (5,6) with the inner surface of one end portion the axial position of which relative to the cover sleeve (5,6) can be varied, and in that the radially inwardly directed annular shoulders (11) of the opposite end portion of the spacer sleeve engage in an annular groove (10) of the housing (9).

2. An arrangement as claimed in Claim 1, characterized in that the formcoupled connection is obtained by equidistant circumferential grooves (7) which engage with one another between the cover sleeve and the spacer sleeve and which are situated on the inner surface of the spacer sleeve (8) and on the surface of the cover sleeve (6).

3. An arrangement as claimed in any of the Claims 1 to 2, characterized in that the half-shells (16, 17) are pressed together by at least one elastic annular element (12).

4. An arrangement as claimed in any one of the Claims 1 to 3, characterized in that the half-shells (16, 17) are held together by a heat-shrunk tubular sleeve (13).

5. An arrangement as claimed in Claim 4, characterized in that the heat-shrunk tubular sleeve (13) extends to beyond the end portion (1) of the cable sheath and beyond the housing (9) of the coupling device.

6. An arrangement as claimed in any one of the Claims 1 to 5, characterized in that the spacer sleeve (8) has a tilt or a bend in the forward direction and that the half-shells (16 and 17) have approximately equal dimensions.

## Revendications

1. Assemblage pour la connexion soulagée en traction et bloquée contre tout déplacement axial d'un câble optique comprenant des éléments de soulagement de traction et pourvu d'un recouvrement de câble, à partir de la zone d'extrémité duquel s'étend au moins une extrémité d'une fibre optique fermée par une douille de réception, à une partie formant boîtier d'un dispositif de connexion constitué d'une douille d'espacement (8) qui est à la fois maintenue avec épousement de forme par la partie formant boîtier (9) et reliée avec épousement de forme à la zone d'extrémité (1) du recouvrement de câble par une douille de terminaison (5,6) enserrant les éléments de soulagement de traction du câble, la douille d'espacement (8) présentant une section médiane qui entoure avec jeu les extrémités des fibres optiques (2,3), et la douille d'espacement étant en deux parties qui sont maintenues juxtaposées l'une contre l'autre par des moyens de fixation, caractérisé en ce que les parties de la douille d'espacement (8) ayant la forme de demi-coquilles sont chaque fois appliquées par la surface intérieure d'une section d'extrémité des demi-coquilles (16, 17) dans une position axiale relative par rapport à la douille de terminaison (5, 6) qui peut être choisie, avec épousement de forme, sur une section longitudinale (6) de cette douille de terminaison (5, 6), et s'engagent par des saillies annulaires orientées radialement vers l'intérieur (11) de la section d'extrémité opposée de la douille de terminaison dans une gorge annulaire (10) de la partie formant boîtier (9).

2. Assemblage suivant la revendication 1, caractérisé en ce que la jonction avec épousement de forme entre la douille de terminaison et la douille d'espacement est assurée par des rainures circonférentielles équidistantes (7) qui s'engagent l'une dans l'autre sur la surface interne de la douille d'espacement (8) et sur la surface de la section d'extrémité de la douille de terminaison (6).

3. Assemblage suivant l'une des revendications 1 et 2, caractérisé en ce que les demi-coquilles (16, 17) sont pressées l'une contre l'autre par au moins un élément annulaire élastique (12).

4. Assemblage suivant l'une quelconque des revendications 1 à 3, caractérisé en ce que les demi-coquilles (16, 17) sont maintenues assemblées par un manchon souple (13) appliqué par rétraction à chaud.

5. Assemblage suivant la revendication 4, caractérisé en ce que le manchon souple appliqué par rétraction à chaud (13) s'étend sur la zone d'extrémité (1) du recouvrement de câble et sur la partie formant boîtier (9) du dispositif de connexion.

6. Assemblage suivant l'une quelconque des revendications 1 à 5, caractérisé en ce que la douille d'espacement (8) est coudée ou courbée dans le sens de passage et les demi-coquilles (16 et 17) sont environ d'égale grandeur.

Fig.2

Fig.3

Fig.1